# EUROPEAN PATENT APPLICATION

(11) **EP 2 152 038 A1**
(43) Date of publication of application: **10.02.2010**
(21) Application number: 08397518.5
(22) Date of filing: 08.08.2008
(51) Int. Cl.: H04W 36/14

(54) **Roaming arrangement between communication networks**

(71) Applicant: TELIASONERA AB, 106 63 Stockholm (SE)
(72) Inventor: Korhonen, Jouni, 11100, Riihimäki (FI); Jalkanen, Tero, 04340, TUUSULA (FI)
(74) Representative: Rahkonen, Erkki Juhani

(57) **Abstract**

A method for providing roaming protocol conversion between a home network and a visited network of a subscriber, the home network using a first roaming protocol and the visited network using either the first roaming protocol or a second roaming protocol. The method comprises: noticing, in the home network, that the subscriber is moving to the visited network; sending, a first query to an internal DNS customer information database of the home network and a second query to an inter-service-provider roaming database to check, whether a gateway of the visited network requires a roaming protocol conversion to be used; if the roaming protocol conversion is needed, supplying this information to a conversion node locating in the home network, the visited network or a roaming network between them; and carrying out the conversion in the conversion node after the subscriber has moved to the visited network.

## Description

### Field of the invention

The present invention relates to communication networks, and more particularly to a roaming arrangement between communication networks.

### Background of the invention

In the recent development of mobile communication systems, emphasis has been put on the evolution of the 3GPP networks towards the next generations of mobile communication networks, one of the most important initiatives being the Evolved Packet System (EPS), which is being specified in 3GPP release 8. The EPS is specified as a packet-switched-only network and as an aspect of IP (Internet Protocol) packet management, the EPS also introduces a new alternative as a roaming protocol, i.e. PMIP (Proxy Mobile IP).

Currently the only roaming protocol used in the GSM and 3G networks is the GTP (GPRS Tunneling Protocol). An introduction of an alternative roaming protocol will naturally create challenges in a situation, where old and new protocol are used side-by-side, i.e. some network operators will switch to PMIP while others will stay with GTP. The 3GPP EPS architecture is specified in the standard documents 3GPP TS23.401 and 3GPP TS23.402. However, since roaming issues are not covered by 3GPP, these documents discuss only about interface definitions in roaming solutions, but they are especially silent about the migration from GTP-based roaming arrangements to PMIP-based roaming arrangements. Moreover, the problem is not limited to mobile communication networks only, but due to its IP nature, PMIP may be used in fixed networks, too, thus expanding the problems to roaming between communication networks in general.

The migration brings about several problems. First, there is no really useful way for operators to know what protocol the other party is using. Secondly, even if the information about the protocol used by a network operator could be provided, there is no exact place (network element) or procedure where and how information could be queried. If for example static configuration or DNS-based mechanisms would be used to somehow provide this information, it would still not provide migration/conversion support as such from GTP only operator to PMIP only operator (and vice versa) e.g. due to reason that there is no standardized node or location carrying out the required conversion, if the conversion is actually needed.

### Summary of the invention

Now there has been invented an improved method and technical equipment implementing the method, by which the migration from the GTP-based roaming to the PMIP-based roaming arrangements can be significantly facilitated. Various aspects of the invention include a method, a telecommunication system and a node of a telecommunication network, which are characterized by what is stated in the independent claims. Various embodiments of the invention are disclosed in the dependent claims.

According to a first aspect, a method according to the invention is based on the idea of providing roaming protocol conversion between a home network of a subscriber and a visited network of the subscriber, the home network using a first roaming protocol and the visited network using either the first roaming protocol or a second roaming protocol. The method comprises: noticing, in the home network, that the subscriber is moving to the visited network; sending, by a node in the home network, a first query to an internal DNS customer information database of the home network and at least a second query to an inter-service-provider roaming database to check, whether a gateway of the visited network requires a roaming protocol conversion to be used between the home network and the visited network; if the roaming protocol conversion is needed, supplying this information to a conversion node configured to carry out the conversion, the conversion node locating in one of the following: the home network, the visited network or an inter-service-provider roaming network between them; and carrying out the conversion in the conversion node after the subscriber has moved to the visited network.

According to an embodiment, the method further comprises: responding, by the internal DNS database, with an address of the gateway of the visited network such that the gateway has different Fully Qualified Domain Name (FQDN) in case of the first roaming protocol used than in case of the second roaming protocol used.

According to an embodiment, the method further comprises: carrying out the conversion in a proxy server of the inter-service-provider roaming network.

According to an embodiment, the first roaming protocol and the second roaming protocol comprise the GPRS Tunneling Protocol (GTP) and the Proxy Mobile IP (PMIP) protocol.

According to an embodiment, the method further comprises: applying IKEv2 IPSec security association, but no confidentiality protection on data packets transmitted between the home network and the inter-service-provider roaming network.

According to an embodiment, the method further comprises: in response to the visited network utilising IP addresses of a sender in its operation, carrying out the conversion only in a PMIP aware proxy in the visited network.

According to an embodiment, the node carrying out the queries is a Serving Gateway according to the EPS architecture and the inter-service-provider roaming database is GSMA IR.21 database.

The arrangement according to the invention provides significant advantages. The network operators are provided with efficient tools for arranging migration from GTP-based roaming to PMIP-based roaming arrangements, whereby it is only required to resolve the capabilities of the visited operator according to the described method. The operators are not required to change their current (GTP-based) roaming protocol, but they can only provide a suitable conversion mechanism, or even outsource the conversion to an inter-network operator.

As a second aspect and a third aspect of the invention, there are provided a telecommunication system and a node of a telecommunication network operating in accordance with the above-described method. These and other aspects of the invention and the embodiments related thereto will become apparent in view of the detailed disclosure of the embodiments further below.

### List of drawings

In the following, various embodiments of the invention will be described in more detail with reference to the appended drawings, in which
- Fig. 1: shows the planned Evolved Packet System (EPS) architecture on general level; and
- Fig. 2: shows a block chart of various embodiments of a roaming system according to the invention.

### Description of embodiments

In the following, the invention will be illustrated by referring to the Evolved Packet System (EPS) as currently being specified in 3GPP release 8 specifications. It is, however, noted that the invention is not limited to the EPS solely, but it can be implemented in any network architecture confronting the above-mentioned problems.

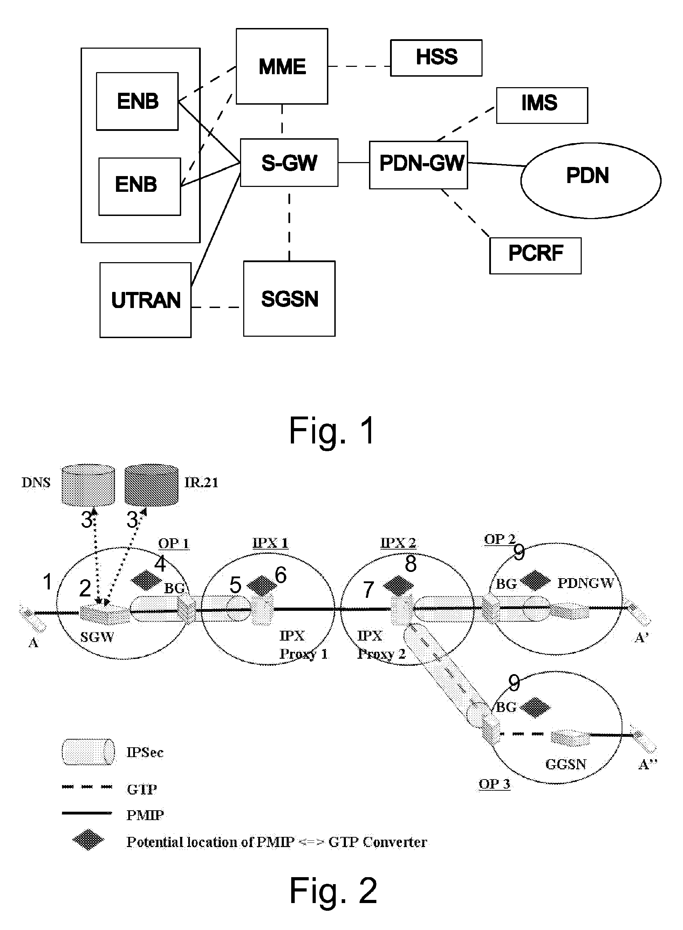

Fig. 1 illustrates the planned Evolved Packet System (EPS) architecture on general level. Compared to the present 3GPP network implementation, the EPS introduces several new interfaces and reference points. On the other hand, the EPS evolves the actual wireless networks to become flatter and more simplified. For example, in EPS's user plane, there are only two types of nodes (base stations and gateways). Another simplification is the control plane is separated on its own, with a separate mobility-management network element (MME).

A fundamental aspect of the EPS is that it is specified as a packet-switched only network ("All-IP network") and therefore packet data handling needs to be considered from the very beginning. Interfaces are based on IP protocols. This means that all services will be delivered through packet connections, including voice. Thus, a single-packet network for all services provides savings for operators using EPS. Figure 1 provides a simplified network diagram for EPS.

As a part of reducing the number of the types of the nodes, most of the protocols implemented in today's RNC are moved to the eNB (evolved Node B). The merging of the RNC and Node B reduce latency with fewer hops in the media path, and distribute the RNC processing load into multiple eNBs. The MME is a signalling-only entity, having a main function to manage the UE's mobility, but also to perform authentication and authorization, the keep up location information of idle-mode UEs and to carry out security negotiations.

EPS defines two logical gateway entities, the S-GW (Serving Gateway) and the P-GW (or PDN-GW; Packet Data Network GW), to provide interfaces between the access network and the PDNs (e.g., the Internet). The S-GW acts as a local mobility anchor, forwarding and receiving packets to and from the eNB where the UE is being served. The P-GW, in turn, interfaces with the external PDNs, such as the Internet and IMS. It is also responsible for several IP functions, such as address allocation and packet classification and routing, and it provides mobility anchoring for non-3GPP access networks.

The PMIP in 3GPP release-8 network, in turn, defines a node called MAG (Mobile Access Gateway), which represents a mobile node towards the mobility anchoring node, the LMA (Local Mobility Anchor). Roughly comparing them to existing 3GPP architecture the MAG is a SGSN (Serving GPRS Support Node), and the LMA is a GGSN (Gateway GPRS Support Node). In the above-described EPS architecture according to 3GPP release-8, the MAG corresponds to the SGW and the LMA corresponds to the P-GW.

The PMIP defines a security association (SA) to be used between the MAG and the LMA, and the security is based on IPSec between the two nodes. The SA can be statically or dynamically created. All control (PMIP signaling) and user plane (IPv4 or IPv6 data packets) traffic is MobilelP-tunneled inside this IPSec tunnel. In 3GPP context, there is further need to be able to separate different flows between the LMA and the mobile node, i.e. to support overlapping address spaces and to mimic the behaviour GTP like NSAPIs. Generic Routing Encapsulation (GRE; defined by RFC 2784) tunnelling is used for this purpose. The GRE tunnel is used inside the IPSec tunnel and below the user plane. Different flows can then be differentiated with GRE Keys.

Even if IPSec is used, it is not mandatory to cipher the traffic. Integrity protection and authentication of peers is enough in several cases. The address management in the LMA is very similar to that of the GGSN.

Figure 2 shows an exemplified roaming situation, in connection of which various embodiments of the GTP/PMIP conversion are also disclosed. In Fig. 2, customer A of the operator network OP1 is potentially roaming into the operator network OP2 or the operator network OP3 (thus potentially becoming A' or A"). Between the operator network OP1 and the operator networks OP2/OP3, there are two inter-service-provider-IP-backbone networks IPX1 and IPX2 (IP exchange), which provide IMS/SIP interworking and other similar roaming services also for non-GSM/UMTS organisations. IPX1 and IPX2 networks both include an IPX proxy 1, 2 for operator networks OP1 and OP2, correspondingly. Possible places for performing the GTP/PMIP conversion are denoted by diamonds.

In Fig. 2, OP1 and OP2 are utilizing new PMIP technology, while OP3 is still using conventional trusted GTP for all of its roaming purposes. OP1 needs to get information regarding the capabilities of OP2 and OP3 before sending traffic to them.

As a first step, traffic (e.g. a call or data) is initiated (1) from the customer A of the operator network OP1. OP1 notices (2) that the customer A is about to roam to another operator network such the traffic is going outside of the operator network's OP1 own domain; in response to this, OP1 performs a check to see the capabilities of recipient (i.e. either OP2 or OP3). For carrying out the check, a node of OP1, preferably the SGW, sends (3) a first request to an internal DNS database that the operator/IPX provider preferably has regarding its own customers and information received during commercial agreement phase, and at least a second request to an inter-service-provider roaming database, such as the common roaming database of GSM Association IR.21 roaming information DB that contain the necessary information about the receiving operator, as agreed when signing the commercial roaming agreement between these operators.

According to an embodiment, the operator's internal DNS database could be configured to use differently generated FQDNs (Fully Qualified Domain Names) such that a particular GGSN/PDN-GW would have different FQDN in case of PMIP based roaming than in case of GTP based roaming. According to an alternative embodiment, the DNS-based solution would be using SRV RRs (RFC2782), which enables operators to use several servers for a single domain and to designate some hosts as primary servers for a particular service. Thus, in response to the SGW's request for a specific service/protocol in a specific domain, the name and address of the correct server will be returned.

If the reply information from these databases reveals that a PMIP-to-GTP conversion is needed (i.e. traffic destined to OP3), OP1 either performs (4) the PMIP-to-GTP conversion itself or forwards the traffic to IPX1, which handles the transportation of inter-operator traffic for OP1. Alternatively, if the traffic is destined to OP2 and OP1 notices that OP2 also supports PMIP-based roaming, all the following migration and protocol conversion steps may be skipped and direct PMIP connection between the OP1 SGW and the OP2 PDN-GW will be used.

Next the traffic is forwarded to the IPX domain, wherein there are several possibilities and variants for the PMIP-to-GTP conversion, depending on technical capabilities and commercial agreements between operator networks and IPX networks, on one hand, and mutual agreements of IPX networks, on the other hand. In any event, the IPX1 receives the traffic (5) and notices that it is destined towards OP2 (or OP3) via IPX2. Then based on the technical capabilities of the IPX1 and commercial agreements with IPX2, the IPX1 may perform the PMIP-to-GTP conversion (6) e.g. in the IPX Proxy 1 or just forward the traffic. If the IPX Proxy 1 should perform the PMIP-to-GTP conversion, it should obtain information regarding this task. This can be achieved e.g. either such the SGW includes the information along the traffic forwarded to IPX1, or if permitted by OP1, the IPX Proxy 1 may carry out the same queries as described above in connection with the SGW.

Next, the IPX2 receives the traffic (7) and notices that it is destined towards OP2 (or OP3), and again depending on the technical capabilities of the IPX2 and commercial agreements with OP2 (or OP3), the IPX2 may perform the PMIP-to-GTP conversion (8) e.g. in the IPX Proxy 2 or just forward the traffic towards the receiving operator. Finally, OP2 (or OP3) receives the traffic and performs the PMIP-to-GTP conversion, if needed and if the operator has a converter node installed.

In the above scenarios, it is possible that an IPSec tunnel might or might not exist between the IPX Proxy 1 and the SGW, i.e. using IPSec on that interface is not mandatory. However, according to the PMIP having a security association between the SGW and the IPX Proxy 1 is practically mandatory. Therefore, according to an embodiment, IKEv2 IPSec usage is defined as mandatory, but preferably without any ciphering (i.e. confidentially protection) in order to advantageously enable to inspect packets within the PMIP tunnel.

There may exist various kinds of deviations from the above roaming arrangement. For example, instead of two IPX Proxies 1 and 2 in Fig. 2, there may be only one IPX Proxy, i.e. either OP1 or OP2 has decided not to use such a node at all. It is also possible to utilize a model, wherein the IPX network is used only as a transit network, i.e. there are no IPX Proxies at all between the operators. In such case, if conversion is required, it needs to take place by either end-operator. Thus, the conversion can take place in the originating operator (=OP1) network, i.e. OP1 itself has some kind of node deployed for this purpose, or the conversion takes place in the destination operator (=OP2) network, i.e. OP2 itself has some kind of node deployed for this purpose.

Especially, if the receiving operator utilizes IP header sender address in its operation, some further considerations are needed regarding to the place of conversion due to the end-to-end properties of the GTP and PMIP. The IPX proxy model for migration and protocol conversion, as depicted in Fig. 2, practically means splitting the end-to-end PMIP tunnel and applying a hop-by-hop approach. While this is technically possible (using PMIP aware IPX Proxies, which can be operated as proxy-MAGs and proxy-LMAs), the receiver of the PMIP tunnel cannot make any assumptions based on the IP address of the sender anymore. This applies to both outer IPSec IP header and in case confidentially protection is not used, also to the GRE key information carried inside the IPSec tunnel. Therefore, if the operator receiving PMIP tunnels bases some logic on PMIP tunnel (i.e. the IPSec tunnel) IP header sender address, it is more or less mandatory that the destination operator deploys the PMIP aware IPX proxy within its own network and performs all protocol conversion inside its own network.

Though it is always possible that the operator and the IPX Proxy provider have a sufficient level of trust via commercial agreements that the operator simply trusts that the IPX Proxy provider will perform the necessary functions such as filtering of incoming traffic, comparing source IP address etc itself. I.e. in this scenario, the operator has outsourced basically most of the filtering to the IPX Proxy. Thus, the conversion takes place in the inter-operator network since OP1 has outsourced conversion to the IPX1, i.e. the IPX Proxy1 is capable of performing the necessary conversion on behalf of OP1, or OP2 has outsourced conversion to the IPX2, i.e. the IPX Proxy2 is capable of performing the necessary conversion on behalf of OP2.

Regarding the implementation details of PMIP/GTP converter, the node implementing it can be, for example, a separate or an integrated network element in the operator network or in the IPX provider network or it can be physically in the same element as the IPX Proxy that is used for other kinds of roaming and interworking purposes, e.g. for SIP based IMS interconnection handling. However, the node implementing the converter should comprise means for obtaining information, if the PMIP-to-GTP or the GTP-to-PMIP conversion should be carried out for a particular transmission. Thus, the node should include means, e.g. a processor connected to a transmitter and a receiver, for performing a first query to the operator's/IPX provider's internal DNS customer information database and at least a second query to an inter-service-provider roaming database, such as the GSMA IR.21 DB. Alternatively, or in addition to that, the means may include a receiver for receiving the information from another node already obtained the information, whether the conversion is necessary.

The node preferably further includes GGSN type of functions as well as SGSN type of functions in order to comply with those requirements. The converter should also comply with the PMIP features such that from one direction it is a MAG kind of element and from another direction it is a PDNGW kind of element.

The actual protocol conversion should preferably operate in both directions, i.e. from PMIP to GTP and from GTP to PMIP. Regarding the control plane messages, the PMIP binding update and acknowledgement messages are converted into GTP-C messages, i.e. mainly "Create PDP Context Request GTP-C" messages and "Create PDP Context Response GTP-C" messages, and vice versa. Similarly PMIP data traffic gets converted to GTP-U messages. The PMIP GRE keys may be converted to GTP TEIDs (Tunnel Endpoint Identifier).

The embodiments have been illustrated above by referring to mobile networks having one or more IPX networks as inter-service-provider-roaming networks between them. However, as mentioned above, the invention is not limited to mobile networks only, but it is equally applicable in non-mobile networks e.g. in fixed networks utilising PMIP. Furthermore, the roaming network between the home and the visited network may be any IP-based network used for roaming purposes, not necessarily an IPX network.

A skilled man appreciates that any of the embodiments described above may be implemented as a combination with one or more of the other embodiments, unless there is explicitly or implicitly stated that certain embodiments are only alternatives to each other.

The functionalities of the invention may be implemented in an apparatus, such as a network node element, also as a computer program which, when executed in a central processing unit CPU or in a dedicated digital signal processor DSP, affects the network node element to implement procedures of the invention. Functions of the computer program SW may be distributed to several separate program components communicating with one another. The computer software may be stored into any memory means, such as the hard disk of a PC or a CD-ROM disc, from where it can be loaded into the memory of network node element. The computer software can also be loaded through a network, for instance using a TCP/IP protocol stack.

It is also possible to use hardware solutions or a combination of hardware and software solutions to implement the inventive means. Accordingly, the above computer program product can be at least partly implemented as a hardware solution, for example as ASIC or FPGA circuits, or as one or more integrated circuits IC, the hardware module or the ICs further including various means for performing said program code tasks, said means being implemented as hardware and/or software.

It is obvious that the present invention is not limited solely to the above-presented embodiments, but it can be modified within the scope of the appended claims.

## Claims

1. A method for providing roaming protocol conversion between a home network of a subscriber and a visited network of the subscriber, the home network using a first roaming protocol and the visited network using either the first roaming protocol or a second roaming protocol; **characterized by** the method comprising:
noticing, in the home network, that the subscriber is moving to the visited network;
sending, by a node in the home network, a first query to an internal DNS customer information database of the home network and at least a second query to an inter-service-provider roaming database to check, whether a gateway of the visited network requires a roaming protocol conversion to be used between the home network and the visited network;
if the roaming protocol conversion is needed, supplying this information to a conversion node configured to carry out the conversion, the conversion node locating in one of the following: the home network, the visited network or an inter-service-provider roaming network between them; and
carrying out the conversion in the conversion node after the subscriber has moved to the visited network.

2. The method according to claim 1, **characterized by** the method further comprising:
responding, by the internal DNS database, with an address of the gateway of the visited network such that the gateway has different Fully Qualified Domain Name (FQDN) in case of the first roaming protocol used than in case of the second roaming protocol used.

3. The method according to claim 1 or 2, **characterized by** the method further comprising:
carrying out the conversion in a proxy server of the inter-service-provider roaming network.

4. The method according to any preceding claim, **characterized in that**
the first roaming protocol and the second roaming protocol comprise the GPRS Tunneling Protocol (GTP) and the Proxy Mobile IP (PMIP) protocol.

5. The method according to claim 4, **characterized by** the method further comprising:
applying IKEv2 IPSec security association, but no confidentiality protection on data packets transmitted between the home network and the inter-service-provider roaming network.

6. The method according to claim 4 or 5, **characterized by** the method further comprising:
in response to the visited network utilising IP addresses of a sender in its operation, carrying out the conversion only in a PMIP aware proxy in the visited network.

7. The method according to any preceding claim, **characterized in that**
the node carrying out the queries is a Serving Gateway according to the EPS architecture and the inter-service-provider roaming database is GSMA IR.21 database.

8. A telecommunication system comprising a home network of a subscriber, a visited network of the subscriber and an inter-service-provider roaming network between them, the home network using a first roaming protocol and the visited network using either the first roaming protocol or a second roaming protocol; **characterized in that:**
the home network is arranged to notice that the subscriber is moving to the visited network;
the home network comprises a node arranged to send a first query to an internal DNS customer information database of the home network and at least a second query to an inter-service-provider roaming database to check, whether a gateway of the visited network requires a roaming protocol conversion to be used between the home network and the visited network;
if the roaming protocol conversion is needed, said node is arranged to supply this information to a conversion node configured to carry out the conversion, the conversion node locating in one of the following: the home network, the visited network or the inter-service-provider roaming network between them; and
the conversion node is arranged to carry out the conversion in after the subscriber has moved to the visited network.

9. The telecommunication system according to claim 8, **characterized in that:**
the internal DNS database is arranged to respond with an address of the gateway of the visited network such that the gateway has different Fully Qualified Domain Name (FQDN) in case of the first roaming protocol used than in case of the second roaming protocol used.

10. The telecommunication system according to claim 8 or 9, **characterized in that:**
a proxy server of the inter-service-provider roaming network is arranged to carry out the conversion.

11. The telecommunication system according to any of the claims 8 - 10, **characterized in that**
the first roaming protocol and the second roaming protocol comprise the GPRS Tunneling Protocol (GTP) and the Proxy Mobile IP (PMIP) protocol.

12. The telecommunication system according to claim 11, **characterized in that:**
the home network is arranged to apply IKEv2 IPSec security association, but no confidentiality protection on data packets transmitted between the home network and the inter-service-provider roaming network.

13. The telecommunication system according to claim 11 or 12, **characterized in that:**
the visited network is arranged to utilise IP addresses of a sender in its operation, and
the visited network comprises a PMIP aware proxy for carrying out the conversion.

14. The telecommunication system according to any of the claims 8 - 13, **characterized in that**
the node carrying out the queries is a Serving Gateway according to the EPS architecture and the inter-service-provider roaming database is GSMA IR.21 database.

15. A node of a telecommunication network, the node locating on a transmission path a home network of a subscriber, a visited network of the subscriber and an inter-service-provider roaming network between them, the home network using a first roaming protocol and the visited network using either the first roaming protocol or a second roaming protocol, **characterized in that** the node comprises:
means for obtaining information, if a protocol conversion between the first roaming protocol and the second roaming protocol should be carried out for a particular transmission; and
means for carrying out the protocol conversion from first to second roaming protocol and from second to first roaming protocol.

16. The node according to claim 15, **characterized in that**
the first roaming protocol and the second roaming protocol comprise the GPRS Tunneling Protocol (GTP) and the Proxy Mobile IP (PMIP) protocol, wherein the node is arranged to
operate as a MAG element of PMIP from one direction and as a PDNGW element of PMIP from another direction.

17. The node according to claim 16, **characterized in that** the node is arranged to
convert PMIP binding update and acknowledgement control plane messages into GTP-C messages and vice versa,
convert PMIP data traffic into GTP-U messages and vice versa; and
convert PMIP GRE keys into GTP TEIDs (Tunnel Endpoint Identifier) and vice versa.
